# EUROPEAN PATENT APPLICATION

(11) **EP 1 530 119 A2**
(43) Date of publication of application: **11.05.2005**
(21) Application number: 04026364.2
(22) Date of filing: 05.11.2004
(51) Int. Cl.: G06F 3/00, H04N 13/04

(54) **Stereoscopic two-dimensional image display device and method**

(30) Priority: 07.11.2003 JP 2003379190
(71) Applicant: Pioneer Corporation, Meguro-ku, Tokyo (JP)
(72) Inventor: Ishikawa, Masaru, c/o Pioneer Corporation, Tokorozawa-shi Saitama (JP); Tomisawa, Isao, c/o Pioneer Corporation, Tokorozawa-shi Saitama (JP)
(74) Representative: Skuhra, Udo, Dipl.-Ing.

(57) **Abstract**

The stereoscopic two-dimensional image display device includes a display section with a image display plane on which a two-dimensional image is displayed; a micro-lens array for imaging light emitted from the image display plane on a stereoscopic image display plane apart from the image display plane, thereby spurious-stereoscopically displaying the two-dimensional image on the stereoscopic image display plane; a position detecting sensor arranged to correspond to the stereoscopic image display plane and producing a signal corresponding to the position subjected to outside physical approaching; and a control unit for changing the image within the stereoscopic image display plane according to an output signal from the position detecting sensor.

## Description

### CROSS REFERENCE OF RELATED APPLICATION

This application is based on and claims priority under 35 U.S.C. §119 with respect to Japanese Patent Application No. 2003-379190 filed on November 7, 2003, the entire content of which is incorporated herein by reference.

### BACKGROUND OF THE INVENTION

This invention relates to a stereoscopic two-dimensional image display device and method for spurious-stereoscopically displaying a two-dimensional image using a micro-lens array.

A stereoscopic two-dimensional image display device is known for displaying the spurious-stereoscopic image of a two-dimensional image in a space ahead of a micro-lens array which is arranged apart from the display plane or screen of the two-dimensional image by a predetermined distance (For example, JP-A-2001-255493, JP-A-2003-98479, JP-A-2002-77341 and JP-A-2003-156712).

Meanwhile, such previously known conventional stereoscopic two-dimensional image display devices only display a two-dimensional image stereoscopically. A viewer, therefore, can only view a displayed two-dimensional image in a passive attitude, and cannot take any action or approaching for the displayed two-dimensional image. The viewer could not perform an interactive communication with the displayed two-dimensional image so that amusement was not given to the viewer.

### SUMMARY OF THE INVENTION

The problem that the invention is to solve is that the conventional stereoscopic two-dimensional image display device only displays a two-dimensional image stereoscopically, and a viewer cannot take any action for the stereoscopic two-dimensional image.

A stereoscopic two-dimensional image display device according to a first aspect of the invention is characterized by including: a stereoscopic image display unit having a display section with an image display plane on which an image is displayed and a micro-lens array arranged apart from the image display plane, for imaging light emitted from the image display plane onto an imaging plane in a space located oppositely to the display section with respect to the micro-lens array, thereby displaying a two-dimensional image on the imaging plane; a position detecting sensor for producing an output signal corresponding to the position of a detected object inserted in the space; and a control unit for changing the image displayed on the image display plane so that the stereoscopic two-dimensional image displayed on the imaging plane changes according to the output signal produced from the position detecting sensor.

The method for displaying a stereoscopic two-dimensional image according to a second aspect of the invention is characterized by including the steps of: displaying an image on an image display plane of a display section; imaging light emitted from the image display plane through a micro-lens array arranged from the image display plane onto an imaging plane in a space located oppositely to the display section with respect to the micro-lens array, thereby displaying a two-dimensional image on the imaging plane; producing a output signal corresponding to the position of a detected object inserted in the space; and changing the image displayed on the image display plane so that the stereoscopic two-dimensional image displayed on the imaging plane changes according to the output signal.

### BRIEF DESCRIPTION OF THE DRAWINGS

These and other objects and advantages of this invention will become more fully apparent from the following detailed description taken with the accompanying drawings in which:
Fig. 1 is a schematic arrangement view of a stereoscopic two-dimensional image display device M according to an embodiment of this invention;
Figs. 2A and 2B are views showing a position detecting sensor included in the display device M; Fig. 2A is a front view of a two-dimensional position detecting sensor, and Fig. 2B is a schematic perspective view of a three-dimensional position detecting sensor;
Fig. 3 is an explanation view for explaining the control contents in the display device M;
Fig. 4 is an explanation view for explaining the other control contents in the display device M;
Fig. 5 is an explanation view for explaining still other control contents in the display device M;
Fig. 6 is an explanation view for explaining yet other control contents in the display device M;
Fig. 7 is a view showing an example of the means employed for image exchange in the display device M;
Fig. 8 is a view showing another example of the means employed for image exchange in the display device M;
Fig. 9 is a view showing still another example of the means employed for image exchange in the display device M;
Fig. 10 is a schematic arrangement view of a stereoscopic two-dimensional display device M2 according to another embodiment of this invention; and
Figs. 11A and 11B are views showing an installed manner of the stereoscopic two-dimensional display device according to this invention; Fig. 11A is a perspective view thereof when seen from the front side, and Fig. 11H is a side sectional view thereof.

### DETAILED DESCRIPTION OF THE PREFERRED EMBODIMENTS

Now referring to the drawings, an explanation will be given of an embodiment of the stereoscopic two-dimensional image display device according to this invention.

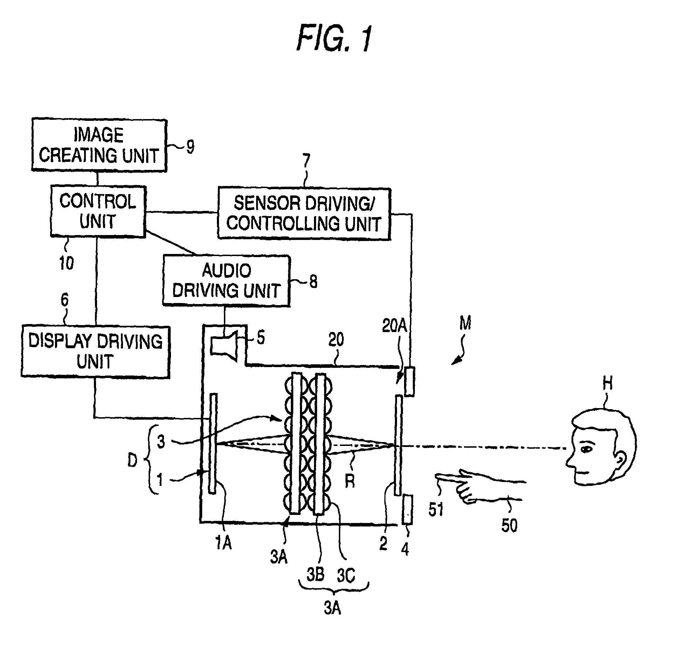

Fig. 1 is a schematic arrangement view of a stereoscopic two-dimensional image display device M according to an embodiment of this invention.

The stereoscopic two-dimensional display device M according to this embodiment is a spurious-stereoscopic image display device which displays a two-dimensional image, which can be visually recognized as stereoscopic display by a viewer, in a predetermined plane in a space.

Concretely, the stereoscopic two-dimensional image display device M includes an enclosure 20; a display section 1 provided along an inner wall of the enclosure 20 and equipped with a image display plane 1A on which a two-dimensional image is displayed; a micro-lens array 3 which is arranged apart by a predetermined distance from and ahead of the image display plane 1A of the display section 1 within the enclosure 20 and images light R emitted from the image display plane 1A onto a stereoscopic image display plane 2 in the space apart by a predetermined distance from and ahead of itself, thereby spurious-stereoscopically displaying the two-dimensional image on the stereoscopic image display plane 2; a position detecting sensor 4 arranged to correspond to the stereoscopic image display plane 2 and producing a signal corresponding to the position being subjected to outside physical approaching; and an audio output section (speaker) 5 for producing voice or sound such as effective sound and human voice.

The stereoscopic two-dimensional image display device M according to this embodiment includes, adjacently to the enclosure 20, a display driving unit 6 for driving the display section 1, a sensor driving/controlling unit 7 for driving the position detection sensor 4 and producing a detected signal through the position detecting sensor 4, an audio driving unit 8 for driving the audio output section (speaker) 5, an image creating unit 9 for creating the image data to be displayed, and a control unit 10 for executing general control for image display and audio output.

The display section 1, which is formed of a general display such as a liquid crystal display, an EL panel or CRT, displays an image corresponding to a driving signal produced from the display driving unit 6 on the image display plane 1A. Thus, the light corresponding to the image is emitted from the image display plane 1A. In the illustrated example, in the display section which can be low-profiled, the image display plane 1A may be a panel-type display such as a liquid crystal display or EL panel.

The micro-lens array 3 is composed of two lens array halves 3A and 3A which are arranged in parallel. Each lens array half 3A, 3A consists of a transparent base plate 3B made of glass or resin with excellent transparency and a plurality of micro-convex lenses 3C arranged to be adjacent in a matrix on both sides thereof. The optical axis of each of the micro-convex lenses 3C formed on the one plane is adjusted to accord with that of each of the corresponding micro-convex lenses 3C formed at the opposite positions on the other plane

The micro-lens array 3 is arranged in parallel to and apart by a predetermined distance (ex. imaging distance of micro-lens array 3) from the image display plane 1A of the display section 1. The micro-lens array 3 images light R corresponding to an image emitted from the image display plane 1A of the display section 1 on a stereoscopic image display plane 2 on the side opposite to the image display plane 1A and apart by a predetermined distance from therefrom, thereby displaying the image displayed on the image display plane 1A on the stereoscopic image display plane 2 which is a spatial two-dimensional plane. Although the image thus imaged is a two-dimensional image, if it has a sense of depth or is displayed with emphasized contrast on a black background image on the display, is displayed to float in the space. Thus, the two-dimensional image appears as if a stereoscopic image was displayed for a viewer on the front. In short, the two-dimensional image displayed on the stereoscopic image display plane 2 is recognized as a stereoscopic two-dimensional image by the viewer. Accordingly, the display section 1 and the micro-lens array 3 constitute a stereoscopic image display section D in which the light corresponding to the image is imaged on the stereoscopic image display plane 2 (i.e. imaging plane).

The stereoscopic image display plane 2 is a plane set virtually in a space but not a substance. The stereoscopic image display plane 2 is a spatial plane which is defined according to the imaging distance of the micro-lens array 3. on the front surface of the enclosure 20, an opening 20A is provided so that the image displayed on the stereoscopic image display plane 2 can be viewed from the front. On the plane of the opening and in the neighborhood thereof, the position detecting sensor 4 is arranged.

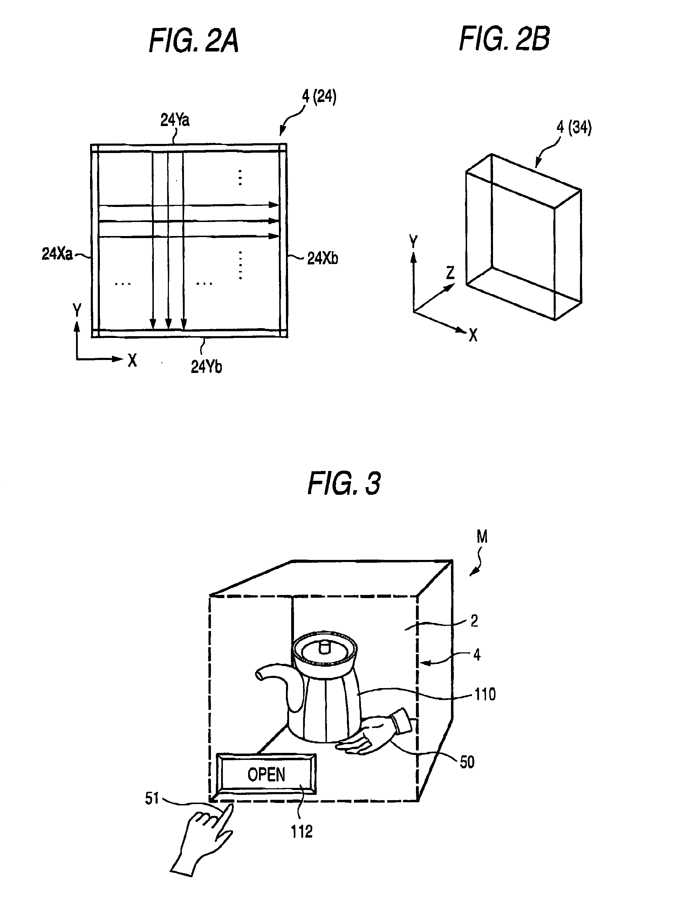

The position detecting sensor 4 is a sensor for detecting the position of an object or a human's hand (detected object) residing within a predetermined detected area. The position detecting sensor 4 may be, for example, a two-dimensional position detecting sensor 24 as shown in Fig. 2A or a three-dimensional position detecting sensor 34 as shown in Fig. 2B.

The two-dimensional position detecting sensor 24 shown in Fig. 2A provides the stereoscopic image display plane 2 or the plane in the vicinity thereof as a detected plane (X-Y plane) which is a detected area. The two-dimensional position detecting sensor 24, when a human's hand or an object such as a rod or plate traverses the detecting plane, detects the position thereof to produce a detected signal (XY coordinates). Incidentally, the detected point on the detected plane may be set to correspond to e.g. the pixel position in the display section 1.

The two-dimensional position detecting sensor 24 may be various kinds of sensors. For example, where an optical sensor as shown in Fig. 2A is adopted, on the one and the other of two sides in parallel in a Y direction of four sides of a square framewhich defines the detecting plane, a light emitting segment 24Xa and a light receiving segment 24Xb of an X-direction detecting line sensor are provided. Likewise, on the one and the other of two sides in parallel in an X direction, a light emitting segment 24Ya and a light receiving segment 24Yb of a Y-direction detecting line sensor are provided. Thus, the positional coordinates ontheX-Yplanewhen the object traverses the detected plane can be estimated.

The three-dimensional position detecting sensor 34 shown in Fig. 2B serves to detect the Z-coordinate in a depth direction (position in a Z direction) as well as X-Y coordinates. Using the space including the stereoscopic image display plane 2 as a detected space which is a detected area, the three-dimensional position detecting sensor 34 detects the spatial position of the object inserted in the detected space to produce a detected signal (X, Y, Z coordinates). The three-dimensional position detecting sensor 34 can be constructed, forexample, by arranging in the Z direction a plurality of two-dimensional position detecting sensors 24 one of which is shown in Fig. 2A in a plurality of layers.

Incidentally, the 2 direction in the stereoscopic two-dimensional image can be represented by a method of representing the sense of depth by incorporating a projection method in the stereoscopic image.

The display driving unit 6 controls the driving of the display section 1 according to the image transmitted from the control unit 10. Concretely, the display driving unit 6 receives through the control unit 10 the image data created by the image creating unit 9, and causes the image corresponding to the image data to be displayed on the image display plane 1A of the display section 1.

The audio driving unit 8 controls the driving of the audio output section (speaker) 5 and causes the audio output section 5 to produce predetermined voice according to an instruction from the control unit 10.

The sensor driving/controlling unit 7 drives the position detecting sensor 4 and receives the detected signal indicative of a detected position from the position detecting sensor 4. The detected signal thus received is sent to the control unit 10. If the detected signal received through the sensor driving/controlling unit 7 is a predetermined detected signal, the control unit 10 instructs the image creating unit 9 to create an image, causes display driving unit 6 to display the created image on the image display plane 1A and causes the audio outputting section 5 to produce the voice corresponding to the created image.

The image creating unit 9, which creates the image data to be created on the display section 1, is adapted to create the image according to a prescribed program for example. The image creating unit 9 previously records predetermined image or picture and so may be adapted to supply the recorded image or picture to the control unit 10 according to an instruction from the control unit 10.

The control unit 10 receives the signal produced from the position detecting sensor 4 through the sensor driving unit 7, and when having received a predetermined detected signal from the position detecting sensor 4, displays the image corresponding to the detected signal in exchange for the image displayed until now. Specifically, the control unit 10 controls the display section 1 to change the displayed image according to the output signal from the position detecting sensor 4, thereby changing the two-dimensional image to be imaged on the special stereoscopic image display plane 2.

The stereoscopic two-dimensional display device M according to this embodiment constructed as described above may be not employed as only a stereoscopic two-dimensional image display device, but employed as an adaptive display device capable of changing the displayed stereoscopic image adaptively according to a user's action.

Referring to various examples, an explanation will be given of the contents of control executed actually. Now, assuming that the stereoscopic two-dimensional image display device M according to this embodiment is installed as a display for exhibition, changes in the image generated by a user's action will be explained.

### Example 1

Example 1 is directed to a case where the display device M is employed as a touchless controller (which controls the display of a stereoscopic image by a touching operation with no actual sense of touching). In this case, as shown in Fig. 3, a pot (object) image 110 is previously displayed spurious-stereoscopically on the stereoscopic image display plane 2. A viewer H can feel the sense of apparently touching the stereoscopic image of the pot by extending his hand toward the stereoscopic image display plane 2.

In this example, in such a displayed state, as shown in Fig. 1, for example, the viewer H inserts his hand 50 (may be replaced by a rod) in a detected area (stereoscopic image display plane 2 or a plane in the vicinity thereof) of the position detecting sensor 4 and moves the hand. Then, the image 110 changes according to the position or movement of the hand 50.

As a change according to the position or movement of the hand 50, for example, when the position detecting sensor 4 detects that the viewer H has moved his hand 50 from left to right, the control unit 10 displays the image illustrating that the pot has rotated from left to right on the image display plane 1A. Then, the pot which is the stereoscopic two-dimensional image displayed on the stereoscopic image display plane 2 changes from left to right. In this way, when the stereoscopic image changes according to the position or movement of the hand 50, the viewer H can feel as if the pot was rotated by the rotation by himself. Namely, the viewer H can acquire the sense that he is actually moving the stereoscopic image by the position or movement of the hand 50.

In this case, actually, although the two-dimensional image displayed only changes, since the image which appears stereoscopically changes, the image can be seen as if the real pot was rotating. Namely, the user interface in which the viewer H can directly participate in the displayed image is constructed by the position detecting sensor 4. Thus, the viewer H can enjoy the image changed in a passive attitude, thereby increasing amusement. Incidentally, the combination of physical approaching by the viewer H for the detected area and image changes can be optionally set by predetermination. Accordingly, the user interface by intuitive or gestural action such as space tracing or touching can be realized. Further, in place of the hand 50, a globe which operates in cooperation with the control unit 10 may be employed. In this case, if forth feedback such as restitution or electric stimulus is realized in order to acquire for the viewer the sense having touched the displayed pot by the globe, the user interface with greater reality can be realized.

If a three-dimensional position detecting sensor is employed as the position detecting sensor 4, since the position in a depth direction of a hand or finger can also be detected, the stereoscopic image displayed can be changed more complicatedly according to the three-dimensional position or movement of the hand or finger.

Further, with a click button (mark) 112 displayed on the stereoscopic image display plane 2 as shown in Fig. 3, by moving the finger to the displayed position of the click button 112 or its vicinity, the image can be changed. For example, by displaying the image illustrating that the cover of the pot has opened by the operation of pushing the click button 112, it is possible to cause the viewer H to feel as if the cover of the pot has opened by the button operation by the viewer H.

In this way, by displaying the click button 112 (mark), the display device according to this embodiment can be used like a "touch panel display". In addition, in this case, since the thing corresponding to the touch panel is not present, the viewer H can change the image or screen with a strange sense that he visually touches the thing but actually does not touch anything. In this way, since the viewer does not touch anything, the display device according to this embodiment can be used in a scene where the viewer cannot touch a real button from the viewpoint of sanitation, for example, in a medical scene.

Further, not only the image is changed according to the operation of the viewer H, but also in combination therewith, the voice can be produced from the audio output section 5. For example, by producing the sound corresponding to the operating status (click sound, drugging sound, NG sound, etc.), the sense of reality or amusement can be enhanced.

Further, by displaying the guide mark such as a circle, cursor, icon, etc. serving as an operating guide at the spot where the viewer H has moved his finger 51, the viewer H can easily recognize his directed position. In this case, if the guide mark is displayed to have any meaning, by carrying out the operation according to this display, the viewer can easily change the image or screen.

### Example 2

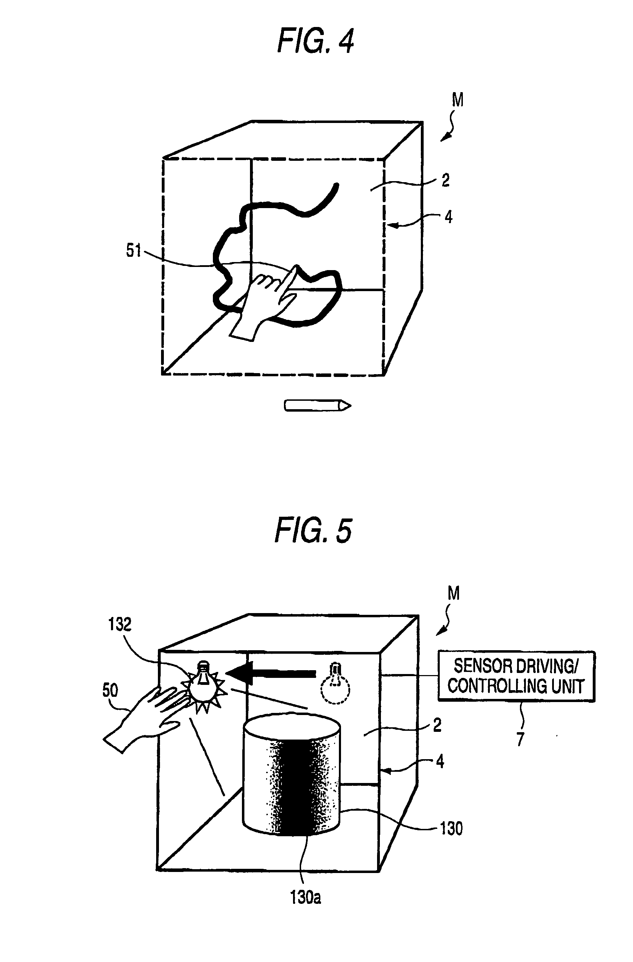

Example 2 is directed to a case where the display device M is employed as a plotting means. In this case, as shown in Fig. 4, when the finger 51 or rod is detected at a certain position within the detected area by the position detecting sensor 4, the control unit 10 displays a point at the position on the stereoscopic image display plane 2 corresponding to the detected position. When the finger 51 or rod continuously moves within the detected area, according to its movement, the points are continuously plotted at the positions on the stereoscopic image display plane 2 corresponding to the detected positions, thereby plotting a line. Now, with a color pallet being displayed simultaneously on the stereoscopic image display plane 2, when a certain color on the color pallet is selected, the color may be changed or the color in subsequent plotting may be changed selectively. Further, with an erasertool, contrary to plotting, the image at the detected position may be erased. Further. if the position of a fingertip is caused to glitter or blink, a strong impression in changes on the stereoscopic image display plane 2 can be given to the viewer H, thereby further dressing amusement.

Where the three-dimensional position detecting sensor is employed as the position detecting sensor 4, the three-dimensional position in the height, width and depth of the tip of the finger or rod can be detected. For this reason, the control unit 10 can compute the position on the displayed image using the projection method on the basis of three items of position information of the height, width and depth to plot the three-dimensional image spuriously and display it.

In this way, the operation of e.g. plotting a picture by a personal computer using a mouse can be carried out for a spatial virtual canvas. Further, in the case of the display device, since a stereoscopic image can be simultaneously displayed on the stereoscopic image display plane 2, the picture superposed on a semi-transparent image, stereoscopic image or real thing can be easily plotted.

### Example 3

As shown in Fig. 5, Example 3 is directed to a case where the control unit 10 displays a lamp 132 and a stereoscopic object 130 on the stereoscopic image display plane 2 so that how the shade 130a of the stereoscopic object 130 changes according to changes in the position of the lamp 132 displayed can be observed as a stereoscopic image.

In this example, with a large number of images each composed of the image position of the lamp 132 and that of the shade 130a of the stereoscopic object 130 being prepared previously, the image position of the lamp 132 is moved according to the movement of the position of the viewer's hand 50 and the image of the shade of the stereoscopic object 130 is moved according to the movement of the image position of the lamp 132, thereby making the display of changing the position of the shade. This changing is completely carried out through exchange of the images. By displaying such a change continuously, how the shade is created according to the change in the position of the lamp 132 can be easily observed.

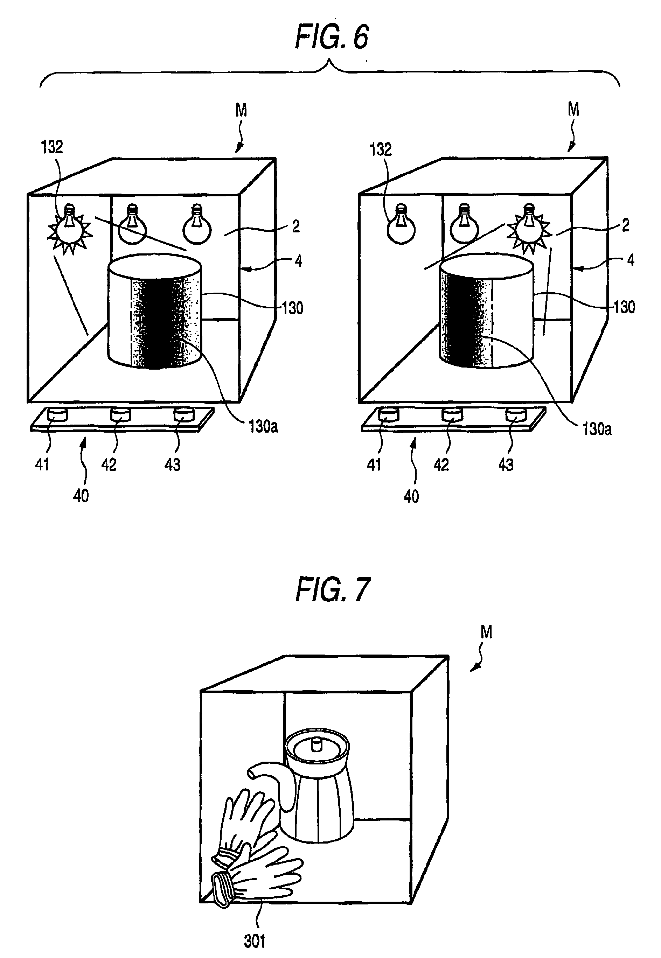

In the example shown in Fig. 5, the position of the lamp 132 is moved. However, as shown in Fig. 6, with an image consisting of a plurality of lamps 132 arranged previously being displayed, by ON/OFF switching of each lamp 132, how the shade 130a of the stereoscopic object 130 is created can be changed. Further, in this embodiment, with a switch 40 having three buttons 41 to 43 corresponding to the lamps 132 being provided as the position detecting sensor 4, when either one of buttons 41 to 43 is depressed, the image of the lamp 132 at the position of the depressed button is turned ON. In short, there are the image of the stereoscopic object 130 and three images of the lamps 132 illuminating the object 130 (the image of each lamp includes two kinds of OFF image and ON image). By the operation of the switch 40, the image is changed. When either one of the buttons 41 to 43 of the switch 40 is depressed, the image of the lamp 132 corresponding to the depressed button 41 to 43 turns ON so that the shade 130a of the stereoscopic object changes according to the position of the lamp 132 turned ON. Incidentally, the colors of the lamps 132 may be discriminated in plurality.

In this way, by changing the image according to theviewer's intention, the viewer H can acquire the sense as if there was not the image but a real thing.

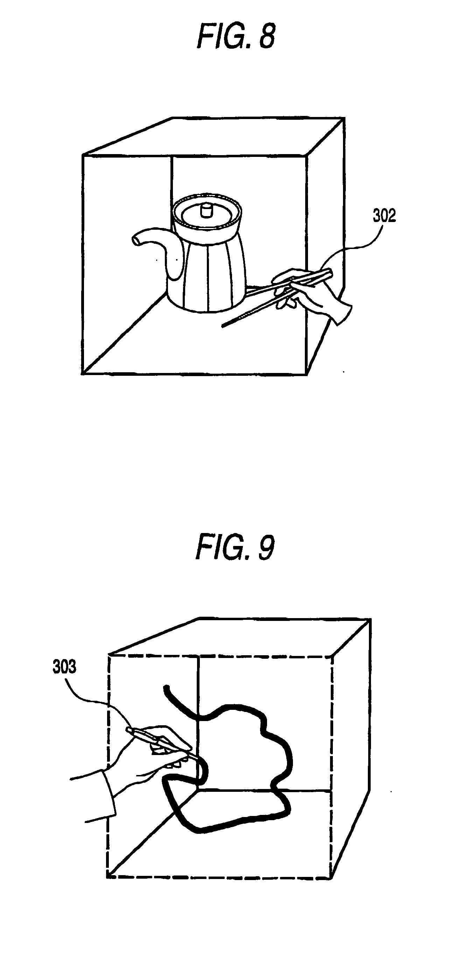

The means employed when the viewer H gives the operating signal may be, in addition to the hand or finger, globes 301, chopsticks 302 and a pen 303 as shown in Figs. 7 to 9, and further may be a mouse, manipulator, magic hand, etc.

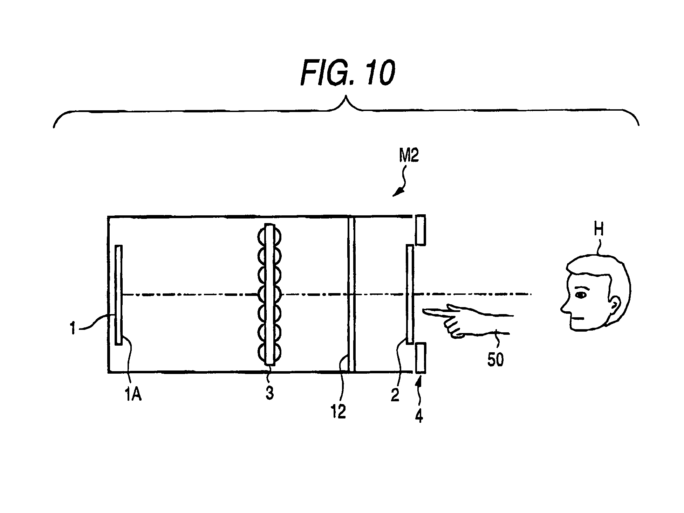

Fig. 10 is a view showing a schematic configuration of a stereoscopic two-dimensional image display device M2 according to another embodiment of this invention. This display device M2 includes, in addition to the configuration of the display device M shown in Fig. 1, a light-transmissive shielding member (transparent glass or acryl plate) 12 arranged between the micro-lens array 3 and the stereoscopic image display plane 2.

If the light-transmissive shielding member 12 is arranged in this way, without hindering the image display, the micro-lens array 3 and the display section 1 at the inner part thereof can be protected. Specifically, in the case of such a display device M2, the viewer is probably urged to extend his hand to the stereoscopic image displayed on the stereoscopic image display plane 2. In an extreme case, the hand or thing may be inserted to the position reaching the micro-lens array 3. This display device M2, which is provided with the shielding member 12 in front of the micro-lens array 3, can protect the micro-lens array 3 and others.

Incidentally, there is a proposal in which when the position detecting sensor 4 detects that the hand or thing has been inserted in the inner part of the enclosure 20, NG sound is generated in response to this detection. This proposal can give an effect of calling a viewer's attention to a certain degree. In this case, although the shielding member 12 is not required, its presence assures the safety of the device more highly. Further, the guide of the position detected by the position detecting sensor can be given by a technique of setting a frame or plotting a line in the vicinity of the position, or installing a laser light source around the enclosure so that the finger 51 the viewer H points is illuminated by the laser light which is projected e.g. in a matrix shape.

The stereoscopic two-dimensional image display device M, M2 may be installed diagonally at the viewer's looking-down position so as to attain a visual recognition property and a usability, in case of using it as the display for an exhibition.

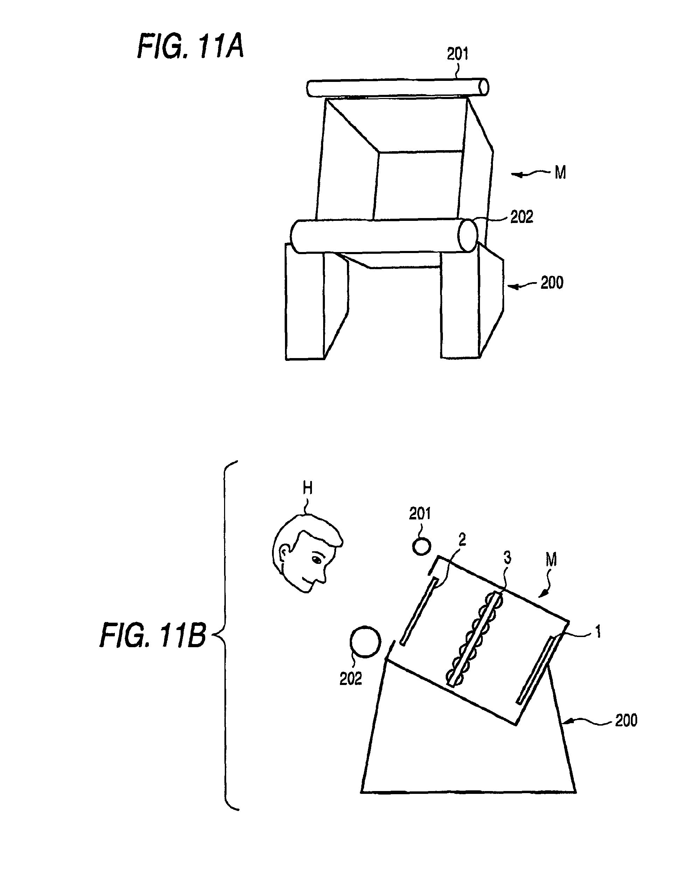

Figs. 11A and 11B show examples of installing the stereoscopic two-dimensional image display device M. In Figs. 11A and 11B, reference numeral 200 denotes a setting stand which is located at a slightly lower position than the viewer. The display device Mwith the front oriented skew-upward is installed onthestand. Inthisway, since the display device M is installed at the viewer's looking-down position, it is easy to see for the man or woman at different heights. Further, the distance from the viewer's viewing point to the stereoscopic two-dimensional image can be made different over the displaying range of the stereoscopic two-dimensional image. Thus, focus can be easily achieved at a portion of the stereoscopic two-dimensional image as compared with the case where the distance from the viewing point to the stereoscopic two-dimensional image is constant, e.g. the viewing point and the stereoscopic two-dimensional image are located at the same height. This facilitates visual recognition of the entire stereoscopic two-dimensional image. Additionally, a chair may be prepared in the vicinity of the stereoscopic two-dimensional image display device M. At the upper and lower positions of the front of the enclosure 20 of the display device M, M2, bars 201 and 202 are provided. The viewer can hold the bar 201, 202, put his hand thereon or rest his body against the bar. The surface of the bar 201, 202 may be covered with a soft and hard-to-soil material which can be replaced as required. Incidentally, the bars may be provided not only horizontally at the upper and lower positions but also vertically at the left and right positions of the front of the display device.

As explained hitherto, the stereoscopic two-dimensional image display device M according to this embodiment includes a display section 1 with an image display plane 1A on which a two-dimensional image is displayed, a micro-lens array 3 for spurious-stereoscopically displaying the two-dimensional image on a stereoscopic image display plane 2 by imaging light emitted from the image display plane 1A onto the stereoscopic image display plane 2 apart from the image display plane 1A, a position detecting sensor 4 arranged to correspond to the stereoscopic image display plane 2, for producing an output signal corresponding to a position subjected to outside physical approaching, and a control unit 10 for changing the image within the stereoscopic image display plane 2 according to the output signal from the position detecting sensor 4.

In accordance with this embodiment, the position detecting senor 4 is arranged to correspond to the stereoscopic image display plane 2 on which a spurious-stereoscopic image is displayed, and the displayed image is changed according to the output signal from the position detecting sensor 4 when the outside physical approaching is received. For this reason, when a viewer takes the physical approaching for the displayed image (concretely, extending or moving a hand or finger), changes in the image reflecting the viewer's intension can be made. Namely, the user interface in which the viewer can directly participate in the displayed image is constructed by the position detecting sensor. Thus, the viewer H can enjoy the image changed in a passive attitude, thereby enhancing amusement.

In the stereoscopic two-dimensional image display device M according to this embodiment, the position detecting sensor 4 is a two-dimensional position detecting sensor 24 for detecting the position of an object which traverses the stereoscopic image display plane 2 or a plane in the vicinity thereof, and the control unit 10 changes the image within the stereoscopic image display plane 2 on the basis of the detected signal from the two-dimensional position detecting sensor 24.

In accordance with this embodiment, since the two-dimensional position detecting sensor 24 is used as the position detecting sensor 4, a viewer can enjoy image changes according to the position or movement of his hand or finger by extending the hand or finger to the detected area of the position detecting sensor 4 and further moving it in this state. For example, since the two-dimensional image displayed on the stereoscopic image display plane 2 is seen as a spurious-stereoscopic image for the viewer, the viewer can feel the sense of touching the stereoscopic image when having extended his hand to it. In accordance with this embodiment, further, at this time, the stereoscopic image displayed can be changed according to the position or movement of the hand. Thus, the object that is seen as the stereoscopic image can be shown as if the object actually moved according to the viewer's own hand or finger.

In the stereoscopic two-dimensional image display device M according to this embodiment, the position detecting sensor 4 is the three-dimensional position detecting sensor 34 which detects the position of the object inserted in the space including the stereoscopic image display plane 2, and the control unit 10 changes the image within the stereoscopic image display plane 2 on the basis of the detected signal from the three -dimensional position detecting sensor 34.

In accordance with this embodiment, since the three-dimensional position detecting sensor 34 is used as the position detecting sensor 4, a viewer can enjoy image changes according to the position or movement of his hand or finger by extending the hand or finger to the detected area of the position detecting sensor 4 and further moving it in this state. Particularly, since the three-dimensional position detecting sensor 34 also detects the position in a depth direction, the viewer can enjoy the image change according to the position or movement of the hand or finger in the depth direction. For example, since the two-dimensional image displayed on the stereoscopic image display plane 2 is seen as a spurious-stereoscopic image for the viewer, the viewer can feel the sense of touching the stereoscopic image when having extended his hand to it. In accordance with this invention, further, at this time, the stereoscopic image displayed can be changed according to the position or movement of the hand. Thus, the object that is seen as the stereoscopic image can be shown as if the object actually moved according to the viewer's own hand.

The stereoscopic two-dimensional image display device M according to this embodiment includes the audio output section 5 for outputting voice, and the control unit 10 produces the voice from the audio output section 5 on the basis of the output signal from the position detecting sensor 4.

In accordance with this embodiment, since the voice is outputted from the audio output section 5 on the basis of the output signal from the position detecting sensor 4, amusement can be further enhanced by outputting the voice corresponding to the image change.

The stereoscopic two-dimensional image display device M according to this embodiment is characterized in that the display section 1 and micro-lens array 3 display a prescribed mark within the stereoscopic image display plane 2 and the control unit 10 changes the image when the position detecting sensor 4 produces an output signal in the area corresponding to the mark.

In accordance with this embodiment, with the prescribed mark or image displayed within the stereoscopic image display plane 2, the image is changed when any physical approaching is taken for the area corresponding to the mark. For this reason, by displaying e.g. a button as the mark, the display device according to this embodiment can be used like a "touch panel display". In addition, in this case, since the thing corresponding to the touch panel is not present, the viewer H can change the image with a strange sense that he visually touches a thing but actually does not touch anything.

The stereoscopic two-dimensional image display device M according to this embodiment is characterized in that the control unit 10 displays the image according to the detected position detected by the position detecting sensor 4.

In accordance with this embodiment, since the image is displayed according to the detected position detected by the position detecting sensor, the operation of e.g. plotting a picture by a personal computer using a mouse can be carried out for a spatial virtual canvas. In this case, the picture superposed on a semi-transparent image or stereoscopic image can be easily plotted.

The stereoscopic two-dimensional image display device M according to this embodiment is characterized by the light-transmissive shielding member 12 arranged between the micro-lens array 3 and the display plane 2.

In accordance with this embodiment, since the light-transmissive shielding member 12 is arranged between the micro-lens 3 and the stereoscopic image display plane 2, without hindering the image display, the micro-lens array 3 and the display section 1 at the inner part thereof can be protected againstapproachingofanobjectfromtheoutside. Specifically, in the case of such a display device M, the viewer is probably urged to extend his hand to the stereoscopic image. In an extreme case, the hand or thing may be inserted to the position reaching the micro-lens array 3. This display device, which is provided with the shielding member 12 in front of the micro-lens array 3, can protect the micro-lens 3 and others by this shielding member 12.

Incidentally, it is not necessary that the display section 1, stereoscopic image display plane 2, micro-lens array 3 and stereoscopic two-dimensional image display device M are located in parallel.

In the description made hitherto, the micro-lens array 3 was a micro-convex lens plate in which a set of two lens array halves 3A are integrated. Without being limited to such a lens plate, it may be a single lens array half 3A. However, in such a case, since the two-dimensional image displayed on the image display plane 1A of the display section 1 is invers ion-displayed on the stereoscopic image display plane 2, the control device 10 or display driving unit 6 may display the two-dimensional image with the video signal inverted previously on the image display plane 1A of the display section 1.

Additionally, if the micro-convex lens 3C is allotted to each of the display pixels formed on the image display plane 1A, the two-dimensional image is not inversion-displayed so that the arrangement of only the single lens half 3A gives rise to no problem.

## Claims

1. A stereoscopic two-dimensional image display device comprising:
a stereoscopic image display unit having a display section with an image display plane on which an image is displayed and a micro-lens array arranged apart from the image display plane, for imaging light emitted from the image display plane onto an imaging plane in a space located oppositely to the display section with respect to the micro-lens array, thereby display ing a two-dimensional image on the imaging plane;
a position detecting sensor for producing an output signal corresponding to the position of a detected object inserted in the space; and
a control unit for changing the image displayed on the image display plane so that the stereoscopic two-dimensional image displayed on the imaging plane changes according to the output signal produced from the position detecting sensor.

2. The stereoscopic two-dimensional image display device according to claim 1, wherein:
the position detecting sensor is a two-dimensional position detecting sensor for detecting the position of the detected object on the imaging plane; and
the control unit changes the image displayed on the image display plane on the basis of the output signal produced from the position detecting sensor.

3. The stereoscopic two-dimensional image display device according to claim 1, wherein:
the position detecting sensor is a three-dimensional position detecting sensor for detecting the position of the detected object on the imaging plane; and
the control unit changes the image displayed on the image display plane on the basis of the output signal produced from the position detecting sensor.

4. The stereoscopic two-dimensional image display device according to claim 1, further comprising
an audio output section for producing voice, wherein
the control unit produces the voice from the audio output section on the basis of the output signal produced from the position detecting sensor.

5. The stereoscopic two-dimensional image display device according to claim 1, wherein:
the stereoscopic display unit displays a predetermined mark in the space; and
the control unit changes the image when the position detecting sensor produces the output signal indicative of an area in the space corresponding to the mark.

6. The stereoscopic two-dimensional image display device according to claim 1, wherein
the control unit displays the image displayed on the image display plane according to a detected position detected by the position detecting sensor.

7. The stereoscopic two-dimensional image display device according to claim 1, further comprising
a light-transmissive shielding member arranged between the micro-lens array and the display plane.

8. A method for displaying a stereoscopic two-dimensional image, comprising:
displaying an image on an image display plane of a display section;
imaging light emitted from the image display plane through a micro-lens array arranged from the image display plane onto an imaging plane in a space located oppositely to the display section with respect to the micro-lens array, thereby displaying a two-dimensional image on the imaging plane;
producing a output signal corresponding to the position of a detected object inserted in the space; and
changing the image displayed on the image display plane so that the stereoscopic two-dimensional image displayed on the imaging plane changes according to the output signal.
